## Europäisches Patentamt

## European Patent Office

## Office européen des brevets

(19)

(11) Veröffentlichungsnummer: **0 149 153**
**B1**

(12) **EUROPÄISCHE PATENTSCHRIFT**

(45) Veröffentlichungstag der Patentschrift:
**01.06.88**

(51) Int. Cl.⁴: **B 01 D 13/02**

(21) Anmeldenummer: **84115404.0**

(22) Anmeldetag: **14.12.84**

(54) Verfahren zur Herstellung von wässrigen Hydroxylaminlösungen.

(30) Priorität: **28.12.83 DE 3347259**

(43) Veröffentlichungstag der Anmeldung:
**24.07.85 Patentblatt 85/30**

(45) Bekanntmachung des Hinweises auf die Patenterteilung:
**01.06.88 Patentblatt 88/22**

(84) Benannte Vertragsstaaten:
**BE CH DE FR GB IT LI NL**

(56) Entgegenhaltungen:
**FR - A - 2 243 904**

**CHEMICAL ABSTRACTS, Band 94, 1981, Seite 134, Nr. 141981y, Columbus, Ohio, US; Y. CHANG u.a.: " Conversion of hydroxylamine hydrochloride to hydroxylamine nitrate by electrodialysis and water-splitting processes" & IND. ENG. CHEM. PROCESS DES. DEV. 1981, 20(2), 361-366**

(73) Patentinhaber: **BASF Aktiengesellschaft,
Carl-Bosch-Strasse 38, D-6700 Ludwigshafen (DE)**

(72) Erfinder: **Weiss, Franz-Josef, Dr. Chem., Schilfweg 1,
D-6708 Neuhofen (DE)**
Erfinder: **Habermann, Wolfgang, Chem. Ing.,
Gonsenheimer Spiess 8, D-6500 Mainz 1 (DE)**
Erfinder: **Hammes, Peter, Dr. Dipl.-Ing., Haagweg 14,
D-6701 Ruppertsberg (DE)**
Erfinder: **Frommer, Elmar, Dr. Chem., Lisztstrasse 117,
D-6700 Ludwigshafen (DE)**
Erfinder: **Thomas, Erwin, Dr. Chem., Borngasse 12,
D-6713 Freinsheim (DE)**
Erfinder: **Thoma, Peter, Dr. Dipl.-Ing., Heidelberger
Ring 16, D-6718 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Hydroxylamin wird technisch in Form seiner Salze, z.B. durch katalytische Reduktion von Stickstoffmonoxid oder Salpetersäure hergestellt. Bei der weiteren Umsetzung der Hydroxylammoniumsalze, z.B. zu Oximen, werden die entsprechenden Anionen als Säuren in Freiheit gesetzt. Häufig ist es jedoch schwierig, solche Fremdanionen wieder aus dem Reaktionsgemisch zu entfernen. Stellt man dagegen freies Hydroxylamin durch Umsetzen von Hydroxylammoniumsalzen mit Alkali her, so lassen sich auch hier die Fremdanionen nur ungenügend entfernen. Es ist auch bereits ein Verfahren bekannt, bei dem man die Anionen durch Elektrodialyse entfernt. Entsprechend den in der DE-OS 20 62 436 beschriebenen Verfahren wird eine wässrige Lösung von Hydroxylammoniumsulfat in Gegenwart von Cyclohexanon unter Bildung von Cyclohexanonoxim der Elektrolyse unterworfen. Diese Arbeitsweise ist wegen der Instabilität des Hydroxylamins und der geringen Lebensdauer der semipermeablen Trennwände für die Herstellung von wässrigen Lösungen von Hydroxylamin wenig geeignet.

Es war deshalb die technische Aufgabe gestellt, ein Verfahren zur Herstellung von wässrigen Lösungen von Hydroxylamin zur Verfügung zu stellen, bei dem hohe Ausbeuten erzielt werden und wässrige Hydroxylaminlösungen mit einem möglichst geringen Gehalt an Anionen erzeugt werden.

Diese technische Aufgabe wird gelöst in einem Verfahren zur Herstellung von wässrigen Lösungen von Hydroxylamin aus wässrigen Hydroxylammoniumsalzlösungen durch Elektrodialyse, wobei man die wässrige Hydroxylammoniumsalzlösung der Mittelzone einer Elektrolysezelle, die durch semipermeable Trennwände in eine Kathodenzone, eine Anodenzone und eine Mittelzone unterteilt ist, zuführt, und elektrolysiert, dadurch gekennzeichnet, dass man als Katholyt wässrige Alkalilaugen mit einem Gehalt an Ammoniak und/oder Aminen verwendet.

Das neue Verfahren hat den Vorteil, dass es mit hohen Ausbeuten verläuft und die Zersetzung des Hydroxylamins unterdrückt wird. Weiter hat das neue Verfahren den Vorteil, dass die semipermeablen Trennwände, insbesondere zum Kathodenraum, eine längere Lebensdauer haben. Ferner hat das neue Verfahren den Vorteil, dass es gelingt, wässrige Hydroxylaminlösungen mit einem möglichst geringen Gehalt an Anionen, z.B. < 10 ppm, herzustellen.

Erfindungsgemäss geht man von wässrigen Lösungen von Hydroxylammoniumsalzen aus. Besonders geeignet sind Hydroxylammoniumsalze von Sauerstoffsäuren, wie Schwefelsäure, Salpetersäure, Phosphorsäure oder Carbonsäuren wie Essigsäure oder Propionsäure. Besondere technische Bedeutung haben Hydroxylammoniumsulfat und -phosphatlösungen erlangt. In der Regel geht man von 5- bis 30 gew.-%igen wässrigen Hydroxylammoniumsalzlösungen aus. Bei der Herstellung hochkonzentrierter, d.h. > 25 gew.-%igen Hydroxylaminlösungen ergänzt man das verbrauchte Hydroxlyammoniumsulfat bis die gewünschte Hydroxylaminkonzentration erreicht ist. Zur Vermeidung von Verdünnungseffekten durch Osmose werden bei dieser Verfahrensweise dem Katholyten Verbindungen zugesetzt, die den osmotischen Druck anheben. Geeignet sind niedermolekulare wasserlösliche, unter Reaktionsbedingungen inerte Verbindungen, z.B. Zucker, Harnstoff oder dessen Derivate. Vorteilhaft haben die verwendeten Hydroxylammoniumsalzlösungen einen Gehalt an Metallionen der 1., 2., 5., 6., 7. und 8. Nebengruppe des periodischen Systems von weniger als 1 ppm.

Die Elektrolyse wird in einer Zelle, die durch zwei semipermeable Trennwände in eine Kathodenzone, eine Anodenzone und eine Mittelzone unterteilt ist, durchgeführt. Die zu elektrolysierende wässrige Lösung von Hydroxylammoniumsalzen wird der Mittelzone zugeführt. Als Anolyt in der Anodenzone verwendet man in der Regel wässrige Lösungen von Sauerstoffsäuren, insbesondere solche, die dem Anion der zu verwendenden Hydroxylammoniumsalzlösung entsprechen. Vorteilhaft haben die verwendeten wässrigen Lösungen einen Gehalt von 0,1 bis 50 Gew.-% an Sauerstoffsäuren. Eine besonders gute Stromausbeute erzielt man, wenn man anstatt wässriger Säurelösungen eine wässrige Lösung von Alkalihydroxiden, z.B. Natriumhydroxid, Alkalicarbonaten, z.B. Natriumcarbonat oder Erdalkalihydroxiden z.B. Calciumhydroxyd, verwendet.

In der Kathodenzone verwendet man erfindungsgemäss als Katholyt wässrige Alkalilaugen mit einem Gehalt an Ammoniak und/oder Aminen. Geeignet sind beispielsweise wässrige Lösungen von Lithiumhydroxid, Natriumhydroxid und Kaliumhydroxid. Bevorzugt wird Natriumhydroxid oder Kaliumhydroxid verwendet. Vorteilhaft hat der Katholyt einen Gehalt von 0,1 bis 25 Gew.-%, insbesondere von 1 bis 10 Gew.-% an Alkalihydroxiden. Geeignet sind auch wässrige Lösungen von Tetraalkylammoniumhydroxiden, wie Tetraethylammoniumhydroxid. Die Alkalilaugen haben einen Gehalt z.B. von 0.001 bis 50 Gew.-%, vorzugsweise von 0.02 bis 10 Gew.-%, insbesondere 0.05 bis 0.8 Gew.-% Ammoniak und/oder Aminen. Geeignete Amine sind primäre, sekundäre oder tertiäre Amine, z.B. mit Alkylresten mit 1 bis 4 Kohlenstoffatomen am Stickstoffatom, die auch eine Hydroxylgruppe oder Alkoxygruppe als Substituenten haben können. Geeignete Amine sind beispielsweise Tripropylamin, Tributylamin, Dipropylamin, n-Propylamin, Dibutylamin, i-Butylamin, 2-Methoxyethylamin, 3-Methoxypropylamin, Ethanolamin, Diethanolamin und Methoxymethylamin. Geeignet sind ferner cyclische Amine wie Aminoethylmorpholin, Aminoethylpyrrolidin oder Cyclohexylamin sowie Polyamine, die durch Umsetzung von Aminen mit Ethylenimin erhältlich sind.

Die Elektrolyse führt man vorteilhaft bei Stromdichten von 0,1 bis 10 kA/m$^2$, insbesondere bei

Stromdichten von 1 bis 3,5 kA/m² durch. Vorteilhaft hält man hierbei eine Temperatur von 10 bis 40 °C, vorzugsweise von 15 bis 28 °C ein.

Als Kathoden verwendet man vorteilhaft korrosionsbeständige Materialien mit geringer Wasserstoffüberspannung, z.B. Edelstähle, Chromnikkelstähle, Nickel, Nickeleisenlegierungen mit einem Eisengehalt von 65 bis 95 Gew.-%, mit Nikkeleisenlegierungen beschichtetes Eisen, vorzugsweise jedoch graphit- oder alkalibeständige Titan- oder Zirkonlegierungen, wie Titan-Eisen, Titan-Nickel, Zirkon-Eisen, Zirkon-Nickel. Geeignete Anodenmaterialien sind beispielsweise Titan, Tantal, Niob oder Niob-Tantal Legierungen, die oberflächlich mit Platinmetallen, Platinmetalloxiden, vorzugsweise mit Platinaten dotiert sind und eine geringe Sauerstoffüberspannung haben. Die Sauerstoffüberspannung sollte bei 1 kA/m² weniger als 300 mV betragen.

Vorteilhaft führt man die Elektrolyse in der Mittelzone unter Ausschluss von molekularem Sauerstoff durch. Das Gehalt an molekularem Sauerstoff sollte einen Wert von 20 ppm nicht überschreiten.

Es hat sich auch als vorteilhaft erwiesen, wenn die zu elektrolysierenden wässrigen Lösungen von Hydroxylammoniumsalzen ein Gehalt an Stabilisatoren haben. Geeignete Stabilisatoren sind beispielsweise 8-Hydroxychinaldin, Flavone, wie Morin, Hydroxychinoline wie 8-Hydroxychinolin, Anthocyanidine wie Cyanidiniumchlorid, Hydroxyanthrachinone wie Chinalizarin, die gegebenenfalls in Kombination mit Polyhydroxyphenolen wie Pyrogallol verwendet werden. Weitere geeignete Stabilisatoren sind Quercetin, Benzonitril, Benzamidoxim, Isocyanate, N-Phenyl-N-Hydroxythioharnstoff Reduktone und/oder Reduktonate, z.B. 2,3-Di-dehydrohexono-1,4-lacton, und Alkalisalze der Ethylendiamintetraessigsäure. Die Konzentration an Stabilisatoren, bezogen auf das Hydroxylammoniumsalz, beträgt vorteilhaft $5.10^{-4}$ bis 1 Gew.-%, insbesondere $5.10^{-3}$ bis $5.10^{-2}$ Gew.-%. Besonders bewährt haben sich Stabilisatoren, die mit Metallionen Chelate bilden.

In der Elektrolysezelle verwendet man bevorzugt semipermeable Trennwände, die zumindestens auf der Seite zur Mittelzone schwach basisch reagieren. Geeignete Membranen sind beispielsweise Anionenaustauschermembranen mit schwach basischen Gruppen, wie polymere Amine oder Polymere bzw. Copolymere die primäre, sekundäre oder tertiäre Amine, z.B. vom Typ $R-NH_2$ $R-NH(CH_3)$, insbesondere $R-N (CH_3)_2$ als ladungstragende Gruppen enthalten. Besonders geeignete Träger für die ionenaustauschenden Gruppen sind Polystyrol-Divinylbenzolcopolymerisate mit 4 bis 16 Gew.-%, insbesondere 6 bis 8 Gew.-% Divinylbenzol.

Andere geeignete schwach basische Membranen sind z.B. Membranen aus hydrierten Styrol-Butadienblockcopolymeren, Polybutadien, Polyisopren, Polyisobutylen oder Polyethylen, die feinteiliges Titanoxidhydrat, Zirkonoxidhydrat, Kaolinit, Montmorillonit, Apatit, synthetische Hydroxylapatit, Magnesiumoxidhydrat, Aluminiumoxidhydrat, Aluminium-Zirkonoxidhydrat in Mengen von 40 bis 70 Gew.-% enthalten. Bevorzugt verwendet man Titanoxidhydrat, Zirkonoxidhydrat, synthetischen Hydroxylapatit oder Zirkonaluminiumoxidhydrat.

Es ist auch möglich, Membranen mit den oben genannten schwach basischen Mitteln, gegebenenfalls zusammen mit einem Binder, wie hydriertem Styrolbutadienblockcopolymeren Polyethylen, Polypropylen, Polybutadien zu beschichten. Die schwach basische Schicht wird erzeugt durch Einarbeiten der schwach basischen Mittel in das thermoplastische Bindemittel auf einem Walzenstuhl oder durch Auftragen von in organischen Lösungsmitteln gelösten bzw. in Wasser fein dispergierten Bindern, z.B. Latexdispersionen von Polyisobutylen Polybutadien und Polyisopren, die schwach basische Mittel enthalten, auf die Membranen.

Geeignet sind auch polymere Membranschichten, z.B. aus Vinylchlorid und/oder Acrylnitril, die insbesondere 40 bis 75 Gew.-% polymere, tertiäre Amine mit einem Molekulargewicht > 250, insbesondere > 500 enthalten. Beide Polymere werden bei der Membranbeschichtung gelöst, z.B. in Dimethylformamid oder Dimethylsulfoxid und anschliessend aufgetrocknet.

Die nach dem Verfahren der Erfindung erhältlichen wässrigen Lösungen von Hydroxylamin eignen sich zur Herstellung von Oximen.

Das Verfahren nach der Erfindung sei in folgenden Beispielen veranschaulicht:

Beispiel 1

Eine dreigeteilte Elektrodialysezelle wird mit 2 Anionenaustauschermembranen von je 1 dm² Elektrodenfläche bestückt. Die Anionenaustauschermembranen bestehen aus einem Styrol-Divinylbenzolcopolymerisat (Divinylbenzolanteil 8%) welches quarternäre Ammoniumgruppen als Ladungsträger enthält. Auf den Membranoberflächen, die die Mittelkammer vom Anoden- und Kathodenraum trennen, sind 0,1 mm dicke Schichten aus 65 Vol.-% hydratisiertem Zirkonoxid und 35 Vol.-% Polyisobutylen aufgetragen. Im Anodenraum befindet sich eine Titangitterelektrode (von 1 dm²), die oberflächlich mit Platinaten vom Typ $Li_{0,3}Pt_3O_4$ dotiert ist. Die Kathode (von 1 dm²) besteht aus Nickel. Als Katholyt wird 5%ige, wässrige Natronlauge mit 0,1% Dibutylamin und im Anolyten 4 gew.-%ige, wässrige Schwefelsäure eingesetzt. In der Mittelkammer der Elektrodialysezelle werden 1 500 g wässrige, 25 gew.-%ige Hydroxylammoniumsulfatlösung mit 100 ppm Morin bei +25 °C umgepumpt. Bei einer Stromdichte von 20 A/dm² Anfangszellspannung von 6 V erhält man nach 285 Ah eine wässrige Hydroxylaminlösung mit < 20 ppm Sulfat. Die Materialausbeute, bezogen auf eingesetztes Hydroxylammoniumsulfat, beträgt ~ 99%, die Stromausbeute bezogen auf Sulfat ~ 52%. Verwendet man anstelle von wässriger Schwefelsäure 5 gew.-%ige, wässrige Natriumkarbonatlösung als Anolyt, so beträgt die Stromausbeute ~ 90%.

**Beispiel 2**

Eine dreigeteilte Elektrodialysezelle mit den Abmessungen wie in Beispiel 1 wird mit zwei Anionenaustauschermembranen aus einem Styrol-Divinylbenzolcopolymerisat (Divinylbenzolanteil ~6%) bestückt, welches quarternäre Ammoniumgruppen als Ladungsträger enthält. Die Oberfläche der Membranen auf der Seite zur Mittelkammer ist mit einer 0.02 mm dicken Schicht eines Styrolcopolymeren mit tertiären Aminogruppen vom Typ $R-N-(CH_3)_2$ beschichtet. Als Kathode wird eine Titaneisenlegierung mit 18 Gew.-% Eisen und als Anode eine mit Platinaten dotierte Titanelektrode verwendet. Der Katholyt besteht aus 5 gew.-%iger, wässriger Natronlauge mit 5% Ammoniak und der Anolyt aus 10 gew.-%iger wässriger Schwefelsäure. In der Mittelkammer der Elektrodialysezelle werden 1 500 g wässrige, 25 gew.-%ige Hydroxylammoniumsulfatlösung mit 100 ppm 8-Hydroxichinolin umgepumpt und elektrolysiert. Bei einer Stromdichte von 20 A/dm², Anfangszellspannung von 5,8 V erhält man bei +23 °C nach 287 Ah eine wässrige Hydroxylaminlösung mit <20 ppm Sulfat. Die Materialausbeute, bezogen auf eingesetztes Hydroxylammoniumsulfat, beträgt ~98,8%, die Stromausbeute bezogen auf Sulfat ~50%.

**Beispiel 3**

Eine dreigeteilte Elektrodialysezelle mit den Abmessungen wie in Beispiel 1 wird mit zwei Anionenaustauschermembranen aus einem Styrol-Divinylbenzolcopolymerisat (Divinylbenzolanteil ~6%) bestückt, die als Ladungsträger quaternäre Ammoniumgruppen enthalten. Als Kathode wird eine Titaneisenlegierung mit 20 Gew.-% Eisen und als Anode eine mit Platinaten dotierte Titanelektrode verwendet. Der Katholyt besteht aus 5 gew.-%iger wässriger Natronlauge mit 1,5 Gew.-% Dibutylaminzusatz und der Anolyt aus 5 gew.-%iger wässriger Schwefelsäure. In der Mittelkammer werden 1 500 g wässrige 25 gew.-%ige Hydroxylammoniumsulfatlösung mit 200 ppm 8-Hydroxichinaldin umgepumpt und bei einer Stromdichte von 20 A/dm² elektrolysiert. Nach ~275 Ah ist die Elektrolyse beendet. Die Materialausbeute an Hydroxylamin, bezogen auf eingesetztes Hydroxylammoniumsulfat, beträgt ~97,2%, die Stromausbeute, bezogen auf Sulfat ~50% Der Restsulfatgehalt liegt bei <10 ppm.

Verwendet man in der Hydroxylammoniumsulfatlösung keinen Stabilisator und setzt man der Lauge kein Dibutylamin zu, beträgt die Materialausbeute bezogen auf eingesetztes Hydroxylammoniumsulfat ~79%.

**Beispiel 4**

Eine dreigeteilte Elektrolysezelle mit den Abmessungen gemäss Beispiel 1 wird mit zwei Anionenaustauschermembranen aus einem Styrol-Divinylbenzolcopolymerisat bestückt, welches quaternäre Ammoniumgruppen als ladungstragende Gruppen enthält. Die Anionenaustauschermembran, die den Kathodenraum von der Mittelkammer trennt, ist mit 6 Gew.-% Divinylbenzol vernetzt und die Membran, die zur Trennung von Anodenraum und Mittelkammer dient, enthält 8 Gew.-% Divinylbenzol, als Copolymerisat. Als Kathode wird eine Zirkonnickellegierung mit 60 Gew.-% Nickel und als Anode eine mit Platinat aktivierte Titananode eingesetzt. Der Katholyt besteht aus wässriger 5%ige Natronlauge mit 3 Gew.-% Dibutylamin, der Anolyt aus 2 gew.-%iger wässriger Schwefelsäure. In der Mittelkammer werden 1 500 g einer wässrigen, 25 gew.-%igen Hydroxylammoniumsulfatlösung ohne Stabilisator eingesetzt und bei +25 °C umgepumpt. Bei einer Stromdichte von 20 A/dm², und Anfangszellspannung von 6 V erhält man nach 250 Ah eine wässrige Hydroxylaminlösung mit weniger als 15 ppm Sulfat. Die Materialausbeute, bezogen auf eingesetztes Hydroxylammoniumsulfat, beträgt ~96,5%, die Stromausbeute bezogen auf Sulfat ~54%.

Verwendet man als Katholyt wässrige 5%ige Natronlauge ohne Dibutylamin, so beträgt die Materialausbeute bezogen auf eingesetztes Hydroxylammoniumsulfat ~78%.

**Patentansprüche**

1. Verfahren zur Herstellung von wässrigen Lösungen von Hydroxylamin aus wässrigen Hydroxylammoniumsalzlösungen durch Elektrodialyse, wobei man die wässrigen Hydroxylammoniumsalzlösungen der Mittelzone einer Elektrolysezelle die durch semipermeable Trennwände in eine Kathodenzone, eine Anodenzone und eine Mittelzone unterteilt ist, zuführt, und elektrolysiert, dadurch gekennzeichnet, dass man als Katholyt wässrige Alkalilaugen mit einem Gehalt an Ammoniak und/oder Aminen verwendet.

2. Verfahren nach Anspruch 1, dadurch gekennzeichnet, dass der Gehalt an molekularem Sauerstoff in der Mittelzone <20 ppm beträgt.

3. Verfahren nach den Ansprüchen 1 und 2, dadurch gekennzeichnet, dass die verwendete Hydroxylammoniumsalzlösung einen Gehalt an Stabilisatoren für Hydroxylamin aufweist.

4. Verfahren nach den Ansprüchen 1 bis 3, dadurch gekennzeichnet, dass die verwendete Hydroxylammoniumsalzlösung einen Gehalt an Schwermetallen von weniger als 1 ppm aufweist.

5. Verfahren nach den Ansprüchen 1 bis 4, dadurch gekennzeichnet, dass der Katholyt einen Gehalt an Ammoniak und/oder Aminen von 0.001 bis 50 Gew.-% hat.

6. Verfahren nach den Ansprüche 1 bis 5, dadurch gekennzeichnet, dass die semipermeablen Trennwände zumindest auf der Seite die der Mittelzone zugewendet ist, schwach basisch sind.

7. Verfahren nach Anspruch 6, dadurch gekennzeichnet, dass die semipermeable Trennwand schwach basische Ionenaustauscher enthält.

8. Verfahren nach Anspruch 6, dadurch gekennzeichnet, dass die semipermeable Trennwand Zirkonoxidhydrat, Titanoxidhydrat, synthetischen Hydroxylapatit und/oder Zirkonaluminiumhydroxidhydratgemische enthält.

## Revendications

1. Procédé de préparation de solutions aqueuses d'hydroxylamine à partir de solutions aqueuses de sel d'hydroxylammonium, par électrodialyse, en amenant les solutions aqueuses de sel d'hydroxylammonium à la zone centrale d'une cellule d'électrolyse qui est divisée, par des parois séparatrices semi-perméables, en une zone cathodique, une zone anodique et une zone centrale, et en les électrolysant, caractérisé par le fait que l'on utilise comme catholyte des lessives alcalines aqueuses contenant de l'ammoniac et/ou des amines.

2. Procédé selon la revendication 1, caractérisé par le fait que la teneur en oxygène moléculaire dans la zone centrale est < 20 ppm.

3. Procédé selon les revendications 1 et 2, caractérisé par le fait que la solution de sel d'hydroxylammonium contient des stabilisants de l'hydroxylamine.

4. Procédé selon les revendications 1 à 3, caractérisé par le fait que la solution de sel d'hydroxylammonium contient moins de 1 ppm de métaux lourds.

5. Procédé selon les revendications 1 à 4, caractérisé par le fait que le catholyte contient 0.001 à 50% en poids d'ammoniac et/ou amines.

6. Procédé selon les revendications 1 à 5, caractérisé par le fait que les parois séparatrices semi-perméables sont faiblement basiques, au moins sur la face tournée vers la zone centrale.

7. Procédé selon la revendication 6, caractérisé par le fait que la paroi séparatrice semi-perméable contient des échangeurs d'ions faiblement basiques.

8. Procédé selon la revendication 6, caractérisé par le fait que la paroi séparatrice semi-perméable contient de l'hydrate d'oxyde de zirconium, de l'hydrate d'oxyde de titane, de l'hydroxylapatite synthétique et/ou des mélanges d'hydrate d'hydroxyle de zirconium et aluminium.

## Claims

1. A process for the preparation of an aqueous solution of hydroxylamine from an aqueous hydroxylammonium salt solution by electrodialysis, the aqueous hydroxylammonium salt solution being fed into the middle zone of an electrolysis cell which is divided into a cathode zone, an anode zone and a middle zone by means of semipermeable membranes, and being electrolyzed, wherein the catholyte used is an aqueous alkali metal hydroxide solution containing ammonia and/or amines.

2. A process as claimed in claim 1, wherein the content of molecular oxygen in the middle zone is < 20 ppm.

3. A process as claimed in claims 1 and 2, wherein the hydroxylammonium salt solution used contains a stabilizer for hydroxylamine.

4. A process as claimed in claims 1 to 3, wherein the hydroxylammonium salt solution used contains less than 1 ppm of heavy metals.

5. A process as claimed in claims 1 to 4, wherein the catholyte contains from 0.001 to 50% by weight of ammonia and/or amines.

6. A process as claimed in claims 1 to 5, wherein the semipermeable membranes are weakly basic at least on the side which faces the middle zone.

7. A process as claimed in claim 6, wherein the semipermeable membrane contains weakly basic ion exchangers.

8. A process as claimed in claim 6, wherein the semipermeable membrane contains zirconium oxide hydroxide, titanium oxide hydroxide, synthetic hydroxylapatite or zirconium aluminum oxide hydroxide, or a mixture of these.